Europäisches Patentamt

European Patent Office

Office européen des brevets

(19)

(11) Veröffentlichungsnummer: **0 211 017**
**B1**

(12) **EUROPÄISCHE PATENTSCHRIFT**

(45) Veröffentlichungstag der Patentschrift: **13.06.90**

(21) Anmeldenummer: **86900724.5**

(22) Anmeldetag: **21.01.86**

(86) Internationale Anmeldenummer:
**PCT/CH86/00008**

(87) Internationale Veröffentlichungsnummer:
**WO 86/04427 31.07.86 Gazette 86/17**

(51) Int. Cl.$^5$: **G 03 B 7/099, G 03 B 7/28**

(54) **BELICHTUNGSMESSELEMENT UND -VORRICHTUNG.**

(30) Priorität: **21.01.85 DE 3501806**

(43) Veröffentlichungstag der Anmeldung:
**25.02.87 Patentblatt 87/09**

(45) Bekanntmachung des Hinweises auf die
Patenterteilung:
**13.06.90 Patentblatt 90/24**

(84) Benannte Vertragsstaaten:
**CH LI NL**

(56) Entgegenhaltungen:
**DE-A-1 952 553      FR-A-2 532 072**
**DE-B-1 210 319      GB-A-1 109 071**
**FR-A-1 132 293      US-A-3 471 704**
**FR-A-2 324 208      US-A-4 047 187**

**L.A. Mannheim:"Look wath's hapening to large
format cameras" Canadian Photography, June,
1979, p.p. 27-32**

(73) Patentinhaber: **Vogt, Philippe**
**Frohalpstrasse 65**
**CH-8038 Zürich (CH)**

(72) Erfinder: **Vogt, Philippe**
**Frohalpstrasse 65**
**CH-8038 Zürich (CH)**

(74) Vertreter: **Blum, Rudolf Emil Ernst et al**
**c/o E. Blum & Co Patentanwälte Vorderberg 11**
**CH-8044 Zürich (CH)**

Courier Press, Leamington Spa, England.

**Beschreibung**

die vorliegende Erfindung betrifft ein Belichtungselement und eine Belichtungsvorrichtung mit einem derartigen Element.

Aus der CH—PS—440 747 ist eine Belichtungsmessvorrichtung bekannt, die ein stabförmiges Gehäuse aufweist, dessen eine Endpartie mit einer vorderen und hinteren Fensteröffnung und einem in wirksame Lage vor der hinteren Fensteröffnung bewegbaren photoelektrischen Wandler versehen ist, und dessen andere Endpartie zum Handhaben der Vorrichtung ausgebildet ist. Die Vorrichtung kann Mittel aufweisen, um die Vorrichtung in die Fläche der Mattscheibe schwenken zu können.

Bei Gebrauch wid das Gehäuse mit seiner die Fensteröffnungen aufweisenden Endpartie unmittelbar vor oder hinter die Mattscheibe gebracht.

Bei der Messung vor der Mattscheibe erfolgt wie bei der ebenfalls bekannten Messkassette eine Defokussierung der Mattscheibenebene, wodurch bei jeder Messung eine Nachfokussierung erforderlich ist. Bei der Messung hinter der Mattscheibe wird die Messung, die vom Streuwinkel der Mattscheibe abhängig ist, verfälscht.

In dem Artikel "Look what's happening to largeformat cameras!" A. Mannheim, Canadian Photography, June 1979, p.p. 27—32, wird vorgeschlagen, zur Belichtungsmessung eine Mattscheibe mit gleichmässig verteilten, punktoförmigen Mess-zellenn zu verwenden, bei welcher lokale Bereiche über eine Tastatur anwählbar sind. Die Erfindung, wie sie in den Patentansprüchen gekennzeichnet ist, löst die Aufgabe eine Belichtungsmessvorrichtung zu schaffen, bei der Lichtmessung in der Filmebene erfolgt und die Handhabung von separaten Vorrichtungen entfällt.

Die mit der Erfindung erreichbaren Vorteile sind darin zu sehen, dass eine differenzierte Integralmessung in der Filmebene erfolgen kann, d.h. dass anstelle der Grossfeldmessung eine selektive Mehrpunktmessung durchgeführt wird, so dass der mittlere Helligkeitsumfang der Aufnahme mit einer einzigen messung erfolgt.

Weitere Merkmale und Vorteile ergeben sich aus der nachfolgenden Beschreibung eines Ausführungsbeispiels der Erfindung anhand der beiliegenden Zeichnungen.

Es zeigen:

Fig. 1 eine Ansicht eines Belichtungsmesselementes,

Fig. 2 eine Einzelheit der in Fig. 1 dargestellten Vorrichtung im vergrösserten Massstab, und

Fig. 3 einen Schnitt entlang der Linie III—III in Figur 1.

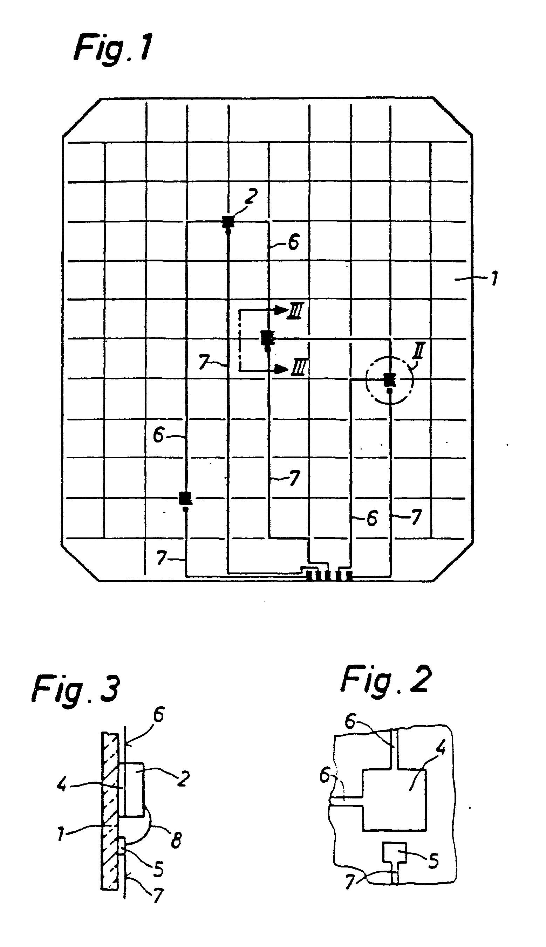

In Figur 1 is ein Belichtungsmesselement dargestellt, das eine an sich bekannte Mattscheibe 1, vier photo-elektrische Wandler 2 und eine Leiteranordnung enthält. Die Leiteranordnung umfasst Kontaktelemente 3, die im Randbereich der einen Schmalseite der Mattscheibe ausgebildet sind, Anschlussbereiche 4, für die photo-elektrischen Wandler, die in Fig. 2 im grösseren Massstab dargestellt sind, und Leiterbahnen 6, 7, die die Kontaktelemente 3 mit den entsprechenden Anschlussbereichen 4, 5 verbinden. Die Leiteranordnung besteht aus elektrisch leitenden Schichten, die auf der matten Seite der Mattscheibe 1 aufgebracht sind.

Wie Figur 2 zeigt, sind die Anschlussbereiche 4, 5 für die photo-elektrischen Wandler 2 underschiedlich bemessen. Dabei ist der Anschlussbereich 4 mit der grösseren Fläche als Kontaktfleck ausgebildet, auf dem der photo-elektrische Wandler 2 so befestigt ist, dass dieser elektrische leitend mit diesem verbunden ist. Am anderen Anschlussbereich 5 mit der kleinen Fläche ist der Bonddraht 8 angeschweisst. Wie Fig. 1 zeigt, sind die Kontaktflekken 4 für die einzelnen photo-elektrischen Wandler 2 mittels der Leiterbahn 6 untereinander mit einem Kontaktelement 3 verbunden, während die Anschlussbereiche 5 mit kleinerer Fläche über einzelne Leiterbahnen 7 jeweils mit einem Kontaktelement 3 verbunden sind. Die Ausbildung der Anschlussbereiche 4, 5 und der Leiterbahnen 6, 7 ist bekannt. Die Anschlussbereiche 4, 5 und die Leiterbahnen 6, 7 könnten aus einer ersten Schicht aus Kupfer, einer zweiten Schicht aus Nickel und einer dritten Schicht aus bondiertem Gold ohne Glanzzusätze bestehen.

Das Belichtungsmesselement ist in eine Kamera einsteckbar, wobei die Kontaktelemente 3 in einer Steckkontaktleiste (nicht dargestellt) eingreifen. Diese Steckkontaktleiste ist mit einer nicht dargestellten Auswerteeinrichtung elektrisch verbunden. Die Auswerteeinrichtung kann einen Mikroprozessor aufweisen, der die von den einzelnen photo-elektrischen Wandlern 2 abgegebenen Signale als gemeinsames Mess-signal empfängt und analysiert. Die Ausgangssignale des Mikroprozessors können dan auf einer Anzeigevorrichtung angezeigt werden.

**Patentansprüche**

1. Belichtungsmeßvorrichtung für Mittel- und Großformatkameras mit Bildeinstellmöglichkeit über eine Bildbetrachtungsscheibe, wobei das Belichtungsmeßelement aus einer in den Abbildungsstrahlengang der Kamera einführbaren, eine Anzahl punktförmiger photoelektrischer Wandler tragenden Bildbetrachtungsscheibe beseht und die Wandler über auf der Scheibe angebrachte Leiterbahnen mit einer Auswerteinrichtung verbunden sind, dadurch gekennzeichnet,

daß eine geringe Zahl von Wandlern (2), z.B. vier, in einem vorbestimmten Muster auf der Bildbetrachtungsscheibe angeordnet ist dass die einzelnen Wandler (2) untereinander so verbunden sind, dass sie ein gemeinsames Mess-signal erzeugen,

daß die Leiterbahnen (6, 7) über am Rand der Bildbetrachtungsscheibe angeordnete Kontaktelemente lösbar an die Auswerteinrichtung angeschlossen sind und

daß die Auswerteinrichtung einen das gemeinsame Mess-signal auswertenden Mikroprozessor aufweist.

2. Belichtungsmeßvorrichtung nach Anspruch 1, dadurch gekennzeichnet, daß die Wandler (2) in Gestalt von Halbleiterelementen mit auf der Bildbetrachtungsscheibe angebrachten Anschlußereichen (4, 5) kontaktiert sind, mit denen die Leiterbahnen (6, 7) einstückig ausgebildet sind.

3. Belichtungsmeßvorrichtung nach Anspruch 1 oder 2, dadurch gekennzeichnet, daß die Bildbetrachtungsscheibe steckbar und zu diesem Zweck die am Scheibenrand angeordneten Kontaktelemente als Steckkontaktelemente (3) ausgebildet sind.

4. Belichtungsmeßvorrichtung nach einem der vorhergehenden Ansprüche, dadurch gekennzeichnet, daß die Bildbetrachtungsscheibe als Mattscheibe (1) ausgebildet und die Wandler (2) auf der matten Seite derselben angeordnet sind.

**Revendications**

1. Posemètre pour appareil photo de moyen et grand format avec réglage de l'image sur un organe plan d'observation de l'image, l'élément de mesure d'éclaireage étant composé d'un tel organe pouvant être introduit dans le trajet du faisceau formateur d'image de l'appareil et portant un certain nombre de transducteurs photoélectriques ponctuels connectés par l'intermédiaire de lignes conductrices disposées sur l'organe avec un dispositif d'exploitation de données, caractérisé en ce

qu'un petit nombre de transducteurs (2), par exemple quatre, sont disposés sur l'organe en un agencement géométrique prédéterminé, les transducteurs individuels (2) étant mutuellement connectés de manière à produire un signal de mesure commun,

que les lignes conductrices (6, 7) sont connectées de manière détachable au dispositif d'exploitation par l'intermédiare d'éléments de contact disposés au bord de l'organe, et

que le dispositif d'exploitation comporte un microprocesseur pour l'exploitation du signal de mesure commun.

2. Posemètre selon la revendication 1, caractérisé en ce que les transducteurs (2) sont contactés en forme d'éléments semi-conducteurs avec des zones de connexion (4, 5) disposées sur l'organe, les lignes conductrices (6, 7) étant d'une pièce avec ces zones.

3. Posemètre selon une des revendications 1 ou 2, caractérisé en ce que l'organe es enfichable, et qu'à cet effet les éléments de contact disposés au bord de l'organe sont en forme d'éléments de contact enfichables (3).

4. Posemètre selon une des revendications précédentes, caractérisé en ce que l'organe est un verre dépoli (1), et que les transducteurs (2) sont disposés sur son côté dépoli.

**Claims**

1. Exposure-measuring device for medium-size and large-size cameras with the possibility of centering via an image viewing plate, whereby an exposure-measuring element consists of an image viewing plate, which element is insertable into the imaging-ray-path of the camera having a plurality of punctate photoelectric transducers and said transducers are connected to an evaluation device via conductive paths disposed on said viewing plate, characterized in that a small number of transducers (2), for example four, is arranged in a predetermined pattern on said image viewing plate, said individual transducers (2) are connected to each other such that they generate a common measuring signal, said conductive paths (6, 7) are removably connected to the evaluation device via contact elements disposed on the edge of the image viewing plate, and the evaluation device includes a micro-processor evaluating the common measuring signal.

2. Exposure-measuring device of claim 1, characterized in that the transducers (2) in the form of semi-conductor elements are contacted with bond pads (4, 5) disposed on the image viewing plate, which bond pads are developed integrally with the conductive paths (6, 7).

3. Exposure-measuring device of claims 1 or 2, characterized in that the image-viewing plate is insertable into the camera, and to this end the contact elements arranged on the edge of the viewing plate are plug elements (3).

4. Exposure-measuring device of one of the preceding claims, characterized in that the image viewing plate is a frosted glass plate (1) and the transducers (2) are applied on the frosted side of the frosted glass plate.

*Fig.1*

*Fig.3*

*Fig.2*